# EUROPEAN PATENT APPLICATION

(11) **EP 3 964 054 A1**
(43) Date of publication of application: **09.03.2022**
(21) Application number: 21020445.9
(22) Date of filing: 03.09.2021
(51) Int. Cl.: A01G 23/091

(54) **METHOD AND EQUIPMENT FOR CUTTING TREE TOPS IN THE VICINITY OF A POWER LINE**

(30) Priority: 03.09.2020 FI 20200061
(71) Applicant: Eltel Networks Oy, 02650 Espoo (FI); Comtiki Oy, 00260 Helsinki (FI)
(72) Inventor: Laitinen, Antti, 79700 Heinävesi (FI); Lagerstedt, Alex, 00250 Helsinki (FI); Laitinen, Sami, 10570 Bromarv (FI)
(74) Representative: Pirhonen, Kari Lennart

(57) **Abstract**

A method for cutting the tops of trees (20) in the vicinity of the electric conductors (12) of a power line (10), according to which method the tops of risky trees harmful to the power line are cut by means of a sawing device or an aerial topping saw attached to a helicopter or other aerial vehicle, and in which method the risky trees are cut based on a risk analysis carried out by means of a laser scan carried in the vicinity of the power line (10). The analysis enables mapping of the positions of the electric conductors (12) and trees (20) in an x-y-z coordinate system and a three-dimensional cut-off surface (T) which determines at which height the risky trees (20) will be cut.

## Description

The object of the invention is a method according to the preamble to Claim 1 for cutting treetops in the vicinity of a power line. The object of the invention is furthermore an apparatus according to the preamble to an independent apparatus claim for cutting treetops in the vicinity of a power line.

Land areas close to a power line must be kept free of trees because this serves to prevent damage to the line caused by trees possibly hitting the electric conductors and the resulting disturbances to the supply of electricity. Due to this, power lines and high-voltage transmission lines in particular are located in a specific power line right-of-way corridor, and electricity network operators are obliged to remove trees and other vegetation potentially harmful for the electric conductor from this area. Also branches of trees extending too close to the electric conductors from the edges of the power line right-of-way corridor or power line area must be trimmed.

Generally, trees in the right-of-way corridor of a power line are cleared from the ground such that the maintenance personnel of the electricity network operator clears and removes the trees growing in the power line right-of-way corridor or in the power line area and the branches of trees growing at the edges of the area using a chainsaw or other suitable machinery. Manual labour is cumbersome and extremely slow, however. Trees and other vegetation have a tendency to grow particularly fast precisely in open areas such as power line areas, which means the trees and other vegetation need to be cleared regularly. Therefore keeping the right-of-way corridor of a power line free of obstructions requires a lot of work from the maintenance personnel of a utility company.

A method for proactively planning the clearing work necessary for a power line right-of-way corridor and for creating an estimated growth forecast is presented in the published patent application US 2010198775 A1. In this method, the trees in the power line area are measured by laser scanning at two separate times, providing the current status of the vegetation in the power line right-of-way corridor, the growth during the period between the measurements and a forecast of future growth. According to this method, the laser scanning measures the branches of the trees at the edges of the power line right-of-way corridor extending towards the electric conductors. At the same time, the branches are checked to determine which of them extend towards the electric conductors at the vertical plane defined by the edge of the power line right-of-way corridor. After this, the local maintenance personnel will trim the branches of the trees at the edge of the power line right-of-way corridor regarded as harmful for the electric conductors, using for example hand tools.

The method presented in the published patent application US 2010198775 A1 is cumbersome because the laser scanning of the entire power line right-of-way corridor must be carried out twice. The method enables an estimate of how much the tree branches extending towards the electric conductors will grow, but the method does not otherwise increase the efficiency of clearing the power line right-of-way corridor and keeping it free of obstructions.

To make clearing and maintenance of a power line right-of-way corridor easier, the patent publication EP1079683 B1 presents a method for cutting treetops in the vicinity of a power line by using an aerial topping saw suspended from a helicopter. According to this method, the tops of trees located close to a power line are cut by flying a helicopter close to the power line, aligned precisely with the direction of the electric conductors. This way, the cut-off line of an aerial topping saw attached to a helicopter and suspended underneath it is determined by a sighting device that belongs to the aerial topping saw, which sighting device is kept pointed precisely at the electric conductor of the power line. A drawback of this method is that the helicopter must fly aligned precisely with the electric conductors of the power line, and the tops of trees located close to the power line must be cut by visual sighting only. Flying precisely aligned with the electric conductors can be very difficult for the helicopter pilot, particularly if this requires flying in a strong side wind.

The purpose of the invention at hand is to create a new, more efficient and more precise method for cutting trees in the vicinity of a power line. The method utilises an aerial topping saw suspended from a helicopter or other aerial vehicle for cutting treetops in a novel way. The method presents a new way to select the trees to be cut and to cut them.

A method according to the invention is characterized in what has been presented in the characteristics section of Claim 1. In a method according to the invention, cutting treetops in the vicinity of a power line is carried out by a method where an aerial topping saw attached to a helicopter or other aerial vehicle and measurement by laser scanning is used in a novel way. According to the method, laser scanning is carried out by a helicopter in advance, providing a very precise three-dimensional point cloud. Thereby the exact map grid coordinates of each point in the point cloud are known. The point cloud enables an analysis of the contour of the ground's surface, the locations of the trees in the area, and the locations of the electric conductors and other power line structures. The point cloud also provides the grid coordinates of each tree trunk base and treetop, making it possible to determine the height of each tree. The point cloud also provides the distance of each tree trunk base from the closest point of the closest electric conductor. The height of a tree is compared with the distance of the base of the tree from the electric conductor, and based on this comparison, a fall-down analysis of the trees in the area is generated, i.e. all trees that could cause harm to the electric conductors of the power line when falling down are identified. The fall-down analysis indicates all the trees located in the vicinity of the electric conductor and which are harmful to the electric conductor. These trees are designated risky trees.

Before cutting trees, a cut-off plane is determined for the electric conductors of the power line with help of the point cloud from laser scanning, taking into account the terrain's contour and the height of the electric conductor. A growth forecast of the trees is also taken into account when determining the cut-off plane; the forecast is obtained by reviewing previous tree growth data from the power line area, for example. By taking into account the growth forecast, it can be achieved that the tree to be cut will not, even after the forecasted growth, extend closer than a predetermined distance from the electric conductor.

According to the method, treetops are cut such that the helicopter pilot follows a display device in the helicopter cockpit from which device the pilot can see the exact real-time position of the aerial topping saw attached to the helicopter in relation to the tops of the trees to be cut. On the display device, the pilot can also see the altitude difference of the aerial topping saw in comparison to the predetermined cut-off plane. Using this information, the helicopter pilot navigates close to a tree designated as risky in the fall-down analysis and harmful to the electric conductor such that the aerial topping saw is on the cut-off plane at a predetermined altitude next to the risky tree. After this, the helicopter pilot cuts the treetop precisely at the correct point by moving the saw horizontally towards the risky tree. When the risky tree is cut, the display device in the helicopter cockpit shows an indication of a tree whose top has been cut. The helicopter pilot can then bring the aerial topping saw attached to the helicopter into the vicinity of the next risky tree in order to cut it.

According to the invention, a point cloud, i.e. a precise image of the power line located in the area to be measured and of the trees located in the vicinity of the power line conductors, is measured in the vicinity of the power line using a laser scanner and a satellite positioning device attached to a helicopter or other aerial vehicle. Using the point cloud generated by the laser scanner, the coordinates of the electric conductors of the power line and the exact coordinates of the tree bases and tops are determined in a three-dimensional x-y-z coordinate system.

In a method according to the invention, the laser scanning data can be used to determine the heights of the trees in the vicinity of the power line such that it is the distance between the point defined on the ground by the coordinates of the tree base and the point defined by the coordinates of the treetop. The distance of a tree from the electric conductor is obtained by measuring the distance between the point defined by the tree base and the point defined by the coordinates of the closest point on the closest electric conductor.

According to the invention, the measurement results obtained this way are analysed to determine which trees measured by laser scanning could be risky trees, i.e. trees that possibly could hit the electric conductors of the power line when falling down and cause damage to the power line. According to the invention, this analysis compares the height of a tree with the distance of the tree base from the closest electric conductor. If the height of the tree is larger than the distance of the tree base from the closest power line, the tree is a risky tree.

However, since trees grow continuously, then also trees not tall enough at the time of measurement to hit the electric conductor when falling down can be risky trees. A risk assessment according to the invention can take into account also the forecasted growth, i.e. the future growth of the tree. The forecasted growth is the length that the tree still needs to grow in order to pose a risk to the electric conductor of the power line. The estimated time of probable future cutting to take place in the same area and information on the general growth rates of trees in the area can be used to help determine the forecasted growth.

Once the laser scanning and tree risk assessment are completed, the appropriate method and height where the tops of the risky trees determined according to the risk analysis should be cut. According to the invention, the cut-off point of a risky tree is determined by deducting the predetermined growth forecast of the tree from the distance between the tree base and the closest electric conductor, i.e. the distance between the point defined by the coordinates of the tree base and the coordinates of the closest point on the closest electric conductor. This defines a safe size for the tree, i.e. the maximum safe length, i.e. the maximum height of the tree; a tree of this size will not reach the electric conductor when falling down and will not pose even a future risk for the electric conductor at the point of time accounted for in the growth forecast.

Once the maximum safe length for a risky tree has been determined, a cut-off height for the tree is determined by adding the determined maximum safe length of the tree to the vertical z coordinate of the point defined by the coordinates of the tree base. This gives a coordinate point located at a length equal to the maximum safe length above the coordinate point of the tree base. Corresponding coordinate points are determined for all the risky trees located in the area to be measured, whereby these coordinate points jointly form a three-dimensional cut-off surface. This three-dimensional cut-off surface is a surface that defines the cut-off heights of all the risky trees in the area to be measured.

According to the invention, the three-dimensional cut-off surface can be processed into a map where the risky trees and their cut-off points are visible as dots on a computer screen, for example. According to the invention, when risky trees are cut by an aerial topping saw or by other cutting device, the map showing the three-dimensional cut-off surface is available to the helicopter pilot or to the operator of some other aerial vehicle. When cutting risky trees, the operator of the helicopter or other aerial vehicle can fly into the vicinity of any of the risky trees shown as dots on the map. After this, the altitude of the helicopter or other aerial vehicle is changed such that the blades of the aerial topping saw or other cutting device are at the same altitude as the determined cut-off height at a risky tree. The helicopter or other aerial vehicle is subsequently maneuvered such that the blades of the aerial topping saw or cutter hit the risky tree, whereby the top of the tree is cut precisely at the determined cut-off height. According to the invention, all the trees cut at the determined cut-off height are documented and shown on the computer screen such that they can be clearly distinguished from the trees yet to be cut.

An essential advantage of a method according to the invention, compared to the known method presented in the patent publication EP1079683 B1, is that this method does not require flying parallel to the conductors, as it is safer to fly against the wind at high winds. It is also not necessary for the pilot or aerial vehicle operator to themselves make sure that all the treetops are pruned, as the computer screen clearly shows all the risky trees not yet pruned.

An apparatus according to the invention is characterised in what has been presented in the characteristics section of the independent apparatus claim. An apparatus according to the invention comprises a helicopter or other aerial vehicle and an aerial topping saw, cutter or other similar cutting device attached to it, possibly a laser scanning device, satellite positioning device and a computer, the screen of which shows the map of a three-dimensional cut-off surface analysed and generated from the point cloud measured by laser scanning and satellite positioning, showing the risky trees located in the measurement area, in the vicinity of the power line and the cut-off height determined for them.

A computer or calculator included in the apparatus determines, using the satellite positioning device, the altitude difference between the aerial topping saw attached to the helicopter and the cut-off height determined for the tree to be sawn. The apparatus further comprises a computer or other documenting device that designates the sawn trees such that they can be distinguished on the computer screen from risky trees yet to be sawn.

In the following, the invention is described by an example with reference to the accompanying drawings. The drawn figure shows a schematic cross-section of a power line 10 where electric conductors 12 are installed high up on transmission tower structures 11. There are trees 20 on both sides of the power line 10, and the exact location of the trees is defined in a three-dimensional x-y-z coordinate system by means of a point cloud from laser scanning and a satellite positioning device. The point cloud from laser scanning provides the coordinates of the electric conductors 12 and the trees 20 from the area to be measured.

According to the invention, at least the coordinates of the electric conductors 12 and the bases of the trees 20 are necessary in order to determine the distances from the base of each tree 20 located in the measurement area to the closest electric conductor 12 of the power line 10. The coordinates of the top of the tree 20 can also be measured to determine the height of the tree 20.

The coordinates of the base of the tree on the ground are designated xyz1 and the coordinates of the top of the tree are designated xyz2. Based on the measurement results, the height h of each tree 20 located in the measurement area is determined; the height of a tree is the distance between the points defined by the coordinates xyz1 and xyz2. Similarly, the distance c of the base of each tree 20 in the measurement area from the closest electric conductor 20 is determined, this being the distance between the point defined by the coordinates xyz1 of the base of the tree 20 and the point on the closest electric conductor 12 closest to the point xyz1.

A risk analysis, i.e. a fall-down analysis, is produced on the basis of the obtained measurement results for each tree 20 in the measurement area, where the height h of the tree 20, i.e. the length of the tree, is compared with the distance c of the tree base from the closest electric conductor 12. If it is determined that h > c, i.e. the height h of the tree 20 is greater than the distance c of the tree base of the tree 20 from the closest electric conductor 20, then the tree 20 is too high and obviously a risky tree which, when falling on the electric conductor 12 of the power line 10, can cause damage to the power line.

The tree 20 can be a potentially risky tree even if h < c, i.e. the height h of the tree 20 is smaller than the distance c of the tree base of the tree 20 from the closest electric conductor 20. This condition is true if the fall-down analysis indicates (h + b) > c, i.e. the height h of the tree 20 added with the predetermined forecasted growth b is larger than the distance c of the tree base of the tree 20 from the closest electric conductor 20.

According to the invention, the cut-off height of the risky trees, i.e. the point where the top of the tree 20 should be sawn off, is determined in the following fashion, by means of the point cloud from laser scanning and satellite positioning device described above. The forecasted growth b is subtracted from the distance c of the base of each tree 20 in the measurement area from the closest electric conductor 12. The resulting length e = (c - b), which is the distance of the base of the tree 20 from the closest electric conductor 12 subtracted with the forecasted growth b, is the maximum safe length e of the tree 20. A tree 20 of the height e will not reach the electric conductor when falling down even in the future at the point of time accounted for when determining the forecasted growth b.

According to the invention, when cutting a tree 20 in the measurement area, a length e, i.e. the maximum safe length of the tree 20, which is the distance of the base of the tree 20 from the closest electric conductor 12 subtracted with the forecasted growth b, is added to the ground-level height coordinate z of the point xyz1 defined by the coordinates of the base of the tree 20. This gives a new point defined by the coordinates xyz3 at a distance of e = (c - b) from the base of the tree 20, i.e. the ground, at the location of the tree 20. This point xyz3 determines the cut-off height of the tree 20, i.e. the point where the top of the tree 20 is cut by sawing or by a cutter or in some other way. The remaining height of the cut-off tree 20 from the ground is the length e = (c - b).

According to the invention, the above-described measurement and risk analysis is completed for all the trees 20 in the measurement area, whereby a new point xyz3 determining the cut-off height of each tree 20 can be determined above the coordinate point xyz1 on the ground at the base of each tree 20 in the manner presented above. These coordinate points form a three-dimensional cut-off surface T that describes the cut-off height of trees in the vicinity of the power line 10.

According to the invention, pruning of the trees is carried out such that the data of the electric conductors 12 of the power line 10 and of the coordinate points of the risky trees 20 are entered into the geoinformation software of the helicopter pilot's computer. A satellite positioning device attached to the aerial topping saw is connected to the geoinformation software of the pilot's computer and the map view of the geoinformation software is entered into the display device of the computer, where the map view shows in real time the location of the aerial topping saw obtained from the satellite positioning device attached to the aerial topping saw, the locations of the risky trees 20 and their cut-off height e. As the pilot flies above the power line, the altitude coordinate reading obtained from the satellite positioning device of the aerial topping saw is compared with the altitude coordinate reading of the three-dimensional cut-off surface T located vertically below. The display device shows the altitude difference between the blades of the aerial topping saw and the three-dimensional cut-off surface T.

Using the map view, the cutting device is brought into the vicinity of the closest risky tree 20 and the cutting device is maneuvered to the three-dimensional cut-off surface T. If necessary, the altitude of the helicopter is changed such that the blades of the aerial topping saw are at the cut-off height e. The cutting device is maneuvered towards the risky tree 20 such that it cuts the tree 20 at the three-dimensional cut-off surface T, i.e. at the cut-off height e determined individually for each tree. Once the top of the tree 20 is cut, the computer software identifies and designates on the map the risky trees 20 pruned at the correct height and documents the completed cuts such that the trees already cut by sawing cannot be confused with trees 20 yet to be sawn.

It is essential in the invention presented in the application that, by means of laser scanning, the method seeks out the trees whose height at that moment or when added with the forecasted growth is so great that they could hit the power line when falling down. For this purpose, the heights of the trees located in the vicinity of the power line and the distances of their bases to the power line are measured. After this, the discovered trees are cut at such a point that the tree cannot hit an electric conductor and cause damage to a power line when falling down, either at the moment or when added with the forecasted growth.

### LIST OF REFERENCE NUMBERS

- 10 =: Power line
- 11 =: Transmission tower
- 12 =: Electric conductor
- 20 =: Tree
- x-y-z1 =: Coordinates of the base of a tree
- x-y-z2 =: Coordinates of the top of a tree
- x-y-z3 =: Coordinates of the cut-off point of a tree
- h =: Height of a tree, i.e. its length
- c =: Distance of the base of a tree from the closest electric conductor
- b =: Forecasted growth, i.e. the length that a tree is forecasted to grow
- e =: Maximum safe length of a tree
- T =: Three-dimensional cut-off surface

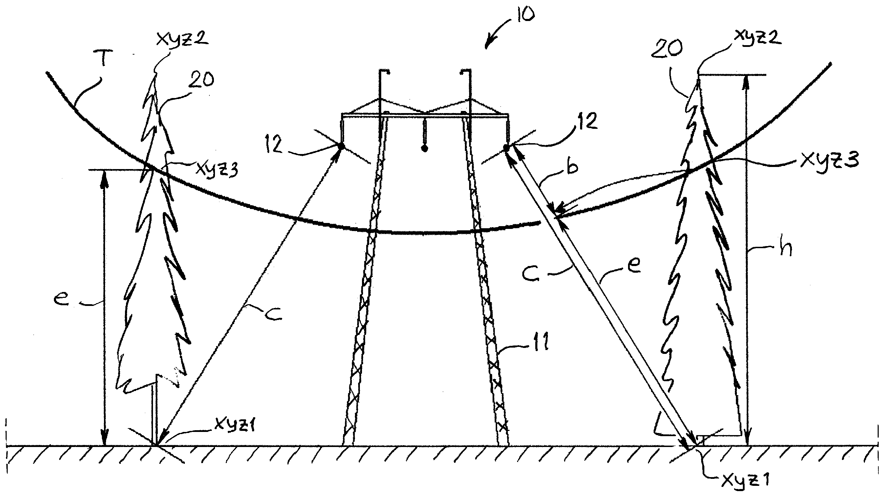

## Claims

1. A method for cutting the tops of trees (20) in the vicinity of the electric conductors (12) of a power line (10), according to which method the tops of risky trees harmful to the power line are cut by means of an aerial topping saw, other sawing device or other cutting device attached to a helicopter or other aerial vehicle, and in which method for determining the risky trees in the vicinity of the right-of-way corridor of the power line (10) a laser scan is carried out where, by means of a point cloud measured by a laser scanner and a satellite positioning device, the position of the trees (20) located in the vicinity of the electric conductors (12) and the power line (10) is determined in an x-y-z coordinate system, **characterised in that**
- by means of a point cloud measured by a laser scanner and a satellite positioning device, the height (h) of a tree (20) located in the measurement area, in the vicinity of the power line (10), is determined, i.e. the distance between a point defined by the coordinates (xyz1) of the base of the tree (20) and a point defined by the coordinates (xyz2) of the top of the tree (20),
- the distance (c) of the base of the tree (20) located in the measurement area from the closest electric conductor (12) is determined by determining the distance between the ground-level point defined by the coordinates (xyz1) of the base of the tree (20) and such a coordinate point on the closest electric conductor (12) that is closest to the coordinate point (xyz1) of the base of the tree (20).
- the forecasted growth (b) is determined, i.e. the length which the tree (20) is expected to grow in the future over a predetermined period,
- a risk analysis, i.e. a fall-down analysis for a tree (20) is determined by comparing the height (h) of the tree (20) with the distance (c) of the base of the tree (20) to the closest electric conductor (12) such that if the height (h) of the tree (20) is greater than the distance (c) of the base of the tree (20) from the closest electric conductor (12) when subtracted with the forecasted growth (b), then the tree (20) is a risky tree which could hit the electric conductor (12) when falling down and cause damage to the power line,
- length (e) of the maximum safe length of the tree (20) is determined by subtracting the forecasted growth (b) from the distance (c) of the base of the tree (20) from the closest electric conductor (12),
- the coordinates (xyz3) of the cut-off point of the tree (20) are determined by adding the length (e) of maximum safe length of the tree (20) to the height coordinate (z) of the point (xyz1) defined by the coordinates of the base of the tree (20), and
- the tree (20) is cut at the point defined by the coordinates (xyz3) of the cut-off point by means of an aerial topping saw, other sawing device or other cutting device attached to a helicopter or other aerial vehicle.

2. A method according to claim 1, **characterised in that,** to present the positions of the trees (20) to be cut and their cut-off points, a three-dimensional cut-off surface T is determined, to be shown on a computer screen or other display device, wherein the coordinates (xyz3) of the cut-off points indicating the cut-off heights (e) of the trees (20) are shown as points that are easy to see.

3. A method according to claim 1 or 2, **characterised in that** an aerial topping saw, other sawing device or other cutting device attached to a helicopter or other aerial vehicle is brought to a point defined by the coordinates (xyz3) of the cut-off point in order to cut the tree (20).

4. A method according to claim 1, 2 or 3, **characterised in that** the trees (20) cut at the determined cut-off height are documented and shown on the screen of the display device such that they can be clearly distinguished from the trees yet to be cut.

5. An apparatus for cutting tops of trees (20) in the vicinity of the electric conductors (12) of a power line (10), which apparatus comprises a helicopter or other aerial vehicle and a sawing device or an aerial topping saw attached to it, a satellite positioning device attached to the aerial topping saw and a computer, **characterised in that** the computer screen shows a map of the three-dimensional cut-off surface (T) created by means of laser scanning and the satellite positioning device, visualising the current position obtained from the satellite positioning device of the aerial topping saw, the electric conductors (12) of the power line (10) and such trees (20) in the vicinity of the power line that are determined as risky trees (20) by means of laser scanning.

6. An apparatus according to claim 5, **characterised in that** the apparatus comprises a computer or a documenting device that designates the trees (20) cut by sawing such that they can be distinguished on the computer screen from trees (20) that have not been cut.
